# EUROPEAN PATENT APPLICATION

(11) **EP 4 737 197 A1**
(43) Date of publication of application: **06.05.2026**
(21) Application number: 25209613.6
(22) Date of filing: 17.10.2025
(51) Int. Cl.: B60L 53/65, B60L 53/66

(54) **SERVER AND SYSTEM**

(30) Priority: 30.10.2024 JP 2024190488
(71) Applicant: TOYOTA JIDOSHA KABUSHIKI KAISHA, Toyota-shi, Aichi-ken 471-8571 (JP)
(72) Inventor: MISAWA, Takahiro, TOYOTA-SHI, AICHI-KEN, 471-8571 (JP)
(74) Representative: Cabinet Beau de Loménie

(57) **Abstract**

The server (100) includes a communication unit (130) that communicates with a DCM (230) of a vehicle (200), and a processor (110). The processor (110) sends a first digital certificate to the DCM (230) through the communication unit (130) when a contract cancellation application of the DCM (230) has not been performed. The processor (110) sends a second digital certificate having a longer expiration period than the first digital certificate to the DCM (230) through the communication unit (130) when the contract cancellation application of the DCM (230) has been performed.

## Description

### CROSS REFERENCE TO RELATED APPLICATIONS

This non-provisional application is based on Japanese Patent Application No. 2024-190488 filed on October 30, 2024 with the Japan Patent Office, the entire contents of which are hereby incorporated by reference and to which the person of the art can refer when considering the present disclosure.

### BACKGROUND

### Field

The present disclosure relates to a server and a system.

### Description of the Background Art

Japanese National Patent Publication No. 2022-527902 discloses a system in which a digital certificate sent from an EV charging station is authenticated in a vehicle. In this system, a communication connection is established between the vehicle and the EV charging station based on the digital certificate, and then the vehicle is charged.

### SUMMARY

Although not explicitly described in Japanese National Patent Publication No. 2022-527902, it is necessary to validate a contract of the vehicle communication device in order for the vehicle to receive the digital certificate, and if the contract of the vehicle communication device is invalid, the vehicle cannot receive the digital certificate. If the vehicle cannot receive the digital certificate, the communication connection cannot be established between the vehicle and the EV charging station.

The present disclosure has been made to solve the above-mentioned problem, and an object of the present disclosure is to provide a server and a system capable of more reliably establishing a communication connection between a vehicle and a power station even if a contract of a vehicle communication device is invalid.

A server according to a first aspect of the present disclosure is a server that sends, to a vehicle, a digital certificate to be used in communication between a vehicle and a power stand, and includes a communication unit that communicates with a vehicle communication device of the vehicle, and a control unit. The digital certificate includes a first digital certificate and a second digital certificate having a longer expiration period than the first digital certificate. The control unit sends the first digital certificate to the vehicle communication device through the communication unit when a contract cancellation application of the vehicle communication device has not been performed, and sends the second digital certificate to the vehicle communication device through the communication unit when the contract cancellation application of the vehicle communication device has been performed.

A system according to a second aspect of the present disclosure includes the server according to the first aspect and a vehicle equipped with a vehicle communication device that communicates with a communication unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram illustrating a configuration of a system according to the present embodiment.
Fig. 2 is a first diagram illustrating a sequence of the system according to the present embodiment.
Fig. 3 is a second diagram illustrating a sequence of the system according to the present embodiment.
Fig. 4 is a sequence diagram of a system according to a first modification of the present embodiment.
Fig. 5 is a sequence diagram of a system according to a second modification of the present embodiment.

### DESCRIPTION OF THE PREFERRED EMBODIMENTS

Hereinafter, an embodiment of the present invention will be described in detail with reference to the drawings. It should be noted that in the following description of the present embodiment, the same or equivalent portions in the drawings will be denoted by the same reference numerals, and the description thereof will not be repeated.

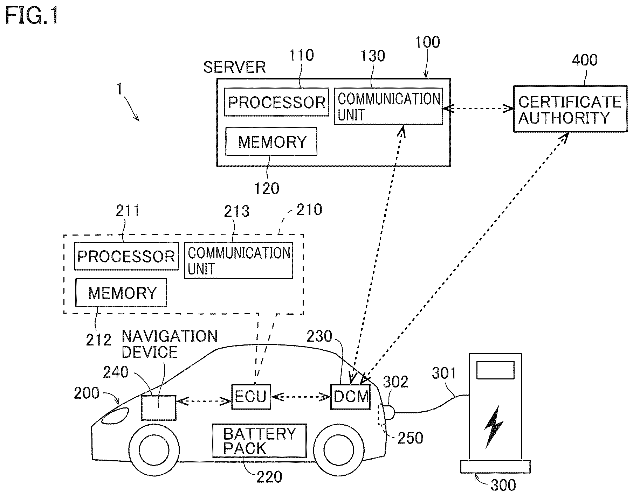

Fig. 1 is a diagram illustrating a configuration of a system 1 according to the present embodiment. System 1 includes a server 100 and a vehicle 200.

Server 100 includes a processor 110, a memory 120, and a communication unit 130. Processor 110 is an example of a "control unit" in the present disclosure.

Memory 120 stores, in addition to a program to be executed by processor 110, information (for example, maps, mathematical expressions, and various parameters) to be used in the program. Communication unit 130 is controlled by processor 110.

Communication unit 130 can communicate with a data communication module (DCM) 230 to be described later, and a certificate authority 400 to be described later.

Vehicle 200 includes an electronic control unit (ECU) 210, a battery pack 220, a DCM 230, a car navigation device 240, and an inlet 250. DCM 230 is an example of a "vehicle communication device" in the present disclosure.

ECU 210 includes a processor 211, a memory 212, and a communication unit 213. Memory 212 stores, in addition to a program to be executed by processor 211, information (for example, maps, mathematical expressions, and various parameters) to be used in the program. Communication unit 213 is controlled by processor 211. Communication unit 213 can communicate with DCM 230 and car navigation device 240 or the like through CAN (Control unit Area Network) communication or the like.

Battery pack 220 is a battery for running vehicle 200. Vehicle 200 may be a plug-in hybrid electric vehicle (PHEV), a battery electric vehicle (BEV), a fuel cell electric vehicle (FCEV), or the like.

Vehicle 200 can be electrically connected to electric vehicle supply equipment (EVSE) 300 by a cable 301, and thereby can exchange the electric power with EVSE 300. Specifically, by inserting (connecting) a connector 302 provided at a distal end of cable 301 into an inlet 250 of vehicle 200, the electric power can be exchanged between vehicle 200 and EVSE 300. The electric power (charging power) from EVSE 300 is supplied to a power storage cell (not shown) of battery pack 220 through a charger/discharger (not shown) of vehicle 200. Thus, the power storage cell is charged. The electric power (discharging power) from battery pack 220 is supplied to EVSE 300 through the charger/discharger. Thus, the power storage cell is discharged. Note that the power storage cell is a secondary battery, typically a lithium ion secondary battery. The lithium ion secondary battery is a battery using lithium as a charge carrier, and may include not only a lithium ion secondary battery in which the electrolyte is liquid, but also an all-solid-state battery in which the electrolyte is solid. The power storage cell is not limited to a lithium ion secondary battery, and may be a nickel-hydrogen secondary battery or other secondary batteries. EVSE 300 is an example of a "power stand" of the present disclosure.

When vehicle 200 and EVSE 300 are connected to each other by cable 301, ECU 210 (communication unit 213) and EVSE 300 communicate with each other. The ECU that communicates with EVSE 300 may be different from ECU 210.

ECU 210 and EVSE 300 communicate with each other by, for example, transport layer security (TLS) communication. The TLS is a protocol for high secure communication. A digital certificate is used in the TLS communication. Based on the digital certificate, secure information can be exchanged between vehicle 200 and EVSE 300. After the communication connection is established between vehicle 200 and EVSE 300, encrypted authentication data is sent from vehicle 200 to EVSE 300. When the authentication based on the authentication data is completed, the charging from EVSE 300 to vehicle 200 and the discharging from vehicle 200 to EVSE 300 are enabled. In a plug and charge (PnC) mode, once the authentication is completed, the billing process and the charging (discharging) process will be initiated automatically. The digital certificate becomes valid when it is written in ECU 210 (memory 212) of vehicle 200. Vehicle 200 may be a vehicle capable of charging (billing) in the PnC mode.

For example, EVSE 300, server 100, or the like confirms an expiration period (expiration date) of the digital certificate written in ECU 210. If the current time is prior to the expiration date, the digital certificate is valid, and thereby a communication connection is allowed to be established between vehicle 200 and EVSE 300. Thus, the electric power can be exchanged between vehicle 200 and EVSE 300.

The digital certificate is issued by certificate authority 400. The digital certificate includes a first digital certificate and a second digital certificate. The expiration period of the first digital certificate is, for example, 5 years from the date of issue. The expiration period of the second digital certificate is, for example, 20 years from the date of issue. In other words, the expiration period of the second digital certificate is longer than the expiration period of the first digital certificate. Thus, the communication based on the first digital certificate is more secure than the communication based on the second digital certificate. The expiration period of the first digital certificate and the expiration period of the second digital certificate are not limited to the above example.

In addition to the communication with communication unit 130 of server 100 as described above, DCM 230 can also communicate with certificate authority 400.

Each of processors 110 and 211 is, for example, a central processing unit (CPU) or a micro-processing unit (MPU). Processor 110 reads a system program and a control program, loads the programs into memory 120, and execute the loaded programs so as to implement various processes, and processor 211 reads a system program and a control program, loads the programs into memory 212, and execute the loaded programs so as to implement various processes. In the present specification, the term "processor" is not limited to a processor in a narrow sense that performs a process in a stored program manner, and may include a hardwired circuit such as ASIC (Application Specific Integrated Circuit), FPGA (Field-Programmable Gate Array). Thus, the term "processor" may also be considered as a processing circuitry in which a process is predefined by computer readable codes and/or hardwired circuits.

Car navigation device 240 is configured to display various kinds of information related to vehicle 200. For example, car navigation device 240 may display the contract state and the expiration period of DCM 230, and the type and the expiration period of the digital certificate written in ECU 210. The various kinds of information mentioned above may be displayed on a user terminal (such as a smartphone or a tablet) carried by the user.

In order for the vehicle to receive a digital certificate, it is necessary to validate the contract of the DCM, and if the contract of the DCM is invalid, the vehicle cannot receive the digital certificate. If the vehicle cannot receive the digital certificate, a communication connection cannot be established between the vehicle and the EVSE.

Thus, in the present embodiment, processor 110 sends a first digital certificate to DCM 230 through communication unit 130 when a contract cancellation application of DCM 230 has not been performed by the user of vehicle 200. On the other hand, processor 110 sends a second digital certificate to DCM 230 through communication unit 130 when the contract cancellation application of DCM 230 has been performed by the user.

Thus, a period in which the digital certificate is valid after the contract of DCM 230 is no longer valid can be more reliably provided longer than that in a case where the first digital certificate is sent to vehicle 200 when the contract cancellation application of DCM 230 has been performed.

### (Sequence Control by System)

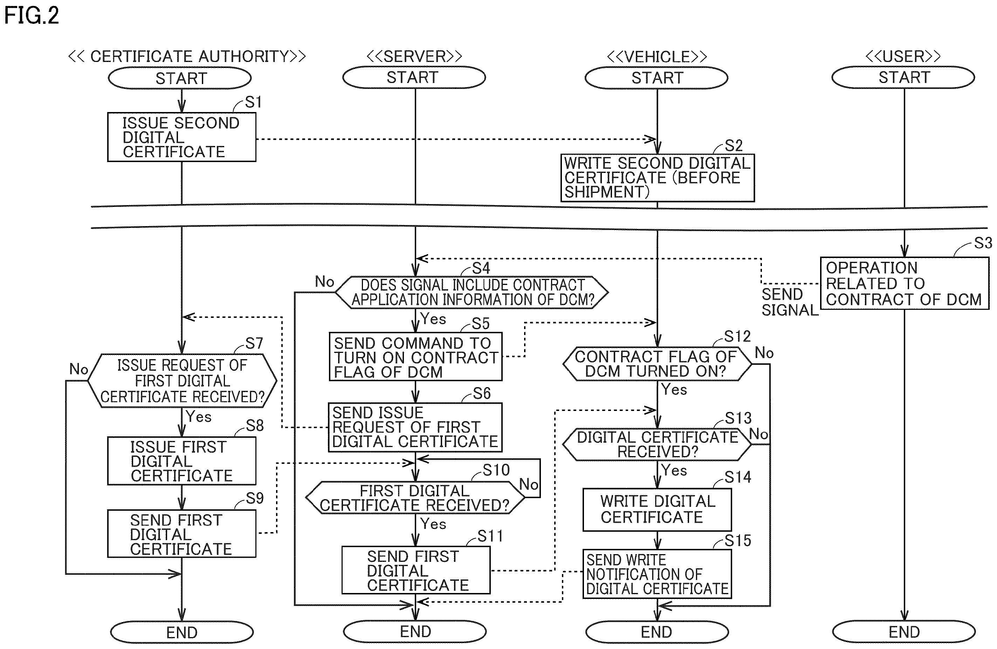

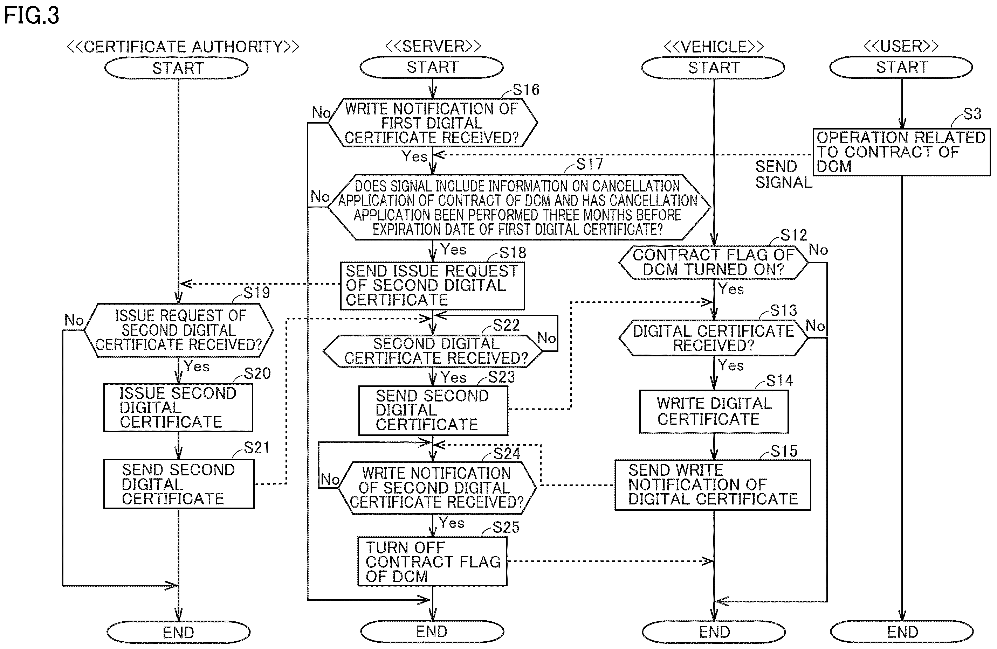

Next, a sequence control by system 1 will be described with reference to Figs. 2 and 3. The procedure of server 100 in Figs. 2 and 3 is executed by processor 110. The procedure of vehicle 200 in Figs. 2 and 3 is executed by ECU 210 (processor 211).

In step S1, certificate authority 400 issues a second digital certificate. The second digital certificate issued by certificate authority 400 is sent to DCM 230 of vehicle 200.

In step S2, the second digital certificate issued in step S1 is written in ECU 210 of vehicle 200. In other words, the second digital certificate is initially written in ECU 210. Specifically, the second digital certificate is written in ECU 210 before vehicle 200 is shipped from the factory.

Thus, even in an initial state of vehicle 200 where the contract of DCM 230 is invalid, a communication connection can be established between EVSE 300 and vehicle 200 based on the second digital certificate.

In step S3, the user performs an operation related to the contract of DCM 230 on car navigation device 240 or the user terminal. Thus, a signal indicating the content of the operation in step S3 is sent to server 100.

In step S4, server 100 determines whether or not the signal sent to server 100 based on the operation of step S3 includes contract application information of DCM 230. If the signal includes the contract application information of DCM 230 (Yes in S4), the procedure proceeds to step S5. If the signal does not include the contract application information of DCM 230 (No in S4), the procedure of server 100 ends. Note that the process of step S4 may be performed in response to the reception of the signal by server 100. In addition, server 100 may perform the process of step S4 in response to the reception of the signal when a write notification (to be described later) indicating that the first digital certificate is written in ECU 210 is not received.

In step S5, server 100 sends a command signal for turning on a contract flag of DCM 230 to vehicle 200 (DCM 230) through communication unit 130. Thus, the contract flag in vehicle 200 is turned on. When the contract flag is turned on, DCM 230 can receive the digital certificate from server 100 (communication unit 130). On the other hand, when the contract flag is turned off, DCM 230 cannot receive the digital certificate from server 100 (communication unit 130). Next, the procedure of server 100 proceeds to step S6. The expression that the contract flag is turned on is an example of "when the contract of the vehicle communication device is valid" in the present disclosure. The expression that the contract flag is turned off is an example of "when the contract of the vehicle communication device is invalid" in the present disclosure.

In step S6, server 100 sends an issue request of the first digital certificate to certificate authority 400 through communication unit 130. Next, the procedure of server 100 proceeds to step S10.

In step S7, certificate authority 400 determines whether or not the issue request of the first digital certificate is received. If the issue request of the first digital certificate is received (Yes in S7), the procedure proceeds to step S8. If the issue request of the first digital certificate is not received (No in S7), the procedure of certificate authority 400 ends. Note that the process of step S7 may be executed at predetermined intervals.

In step S8, certificate authority 400 issues the first digital certificate. Next, in step S9, certificate authority 400 sends the first digital certificate issued in step S8 to server 100. Thereafter, the procedure of certificate authority 400 ends.

In step S10, server 100 determines whether or not the first digital certificate is received by communication unit 130. If the first digital certificate is received (Yes in S10), the procedure proceeds to step S11. If the first digital certificate is not received (No in S10), the process of step S10 is repeated.

In step S11, server 100 sends the first digital certificate received from certificate authority 400 in step S9 to vehicle 200 (DCM 230) through communication unit 130. In other words, server 100 sends the first digital certificate to DCM 230 when the contract application of DCM 230 has been performed by the user of vehicle 200 (Yes in S4).

During a period in which the contract of DCM 230 is valid, the digital certificate can be easily acquired by communication. Therefore, even if the first digital certificate having a relatively short expiration period is sent to DCM 230, since the contract of DCM 230 is valid, vehicle 200 can easily update the first digital certificate. This makes it possible to increase the security of communication between vehicle 200 and EVSE 300 by using the first digital certificate, and while preventing the period in which vehicle 200 possesses the first digital certificate from being interrupted.

In step S12, vehicle 200 determines whether or not the contract flag of DCM 230 is turned on. If the contract flag of DCM 230 is turned on (Yes in S12), the procedure proceeds to step S13. If the contract flag of DCM 230 is turned off (No in S12), the procedure of vehicle 200 ends. The process of step S12 may be executed at predetermined intervals after vehicle 200 is shipped from the factory.

In step S13, vehicle 200 determines whether or not the digital certificate is received. If the digital certificate is received (Yes in S13), the procedure proceeds to step S14. If the digital certificate is not received (No in S13), the procedure of vehicle 200 ends.

In step S14, vehicle 200 writes the received digital certificate in ECU 210 (memory 212). Next, the procedure of vehicle 200 proceeds to step S15.

In step S15, vehicle 200 sends to server 100 a notification indicating that the digital certificate has been written in step S14. This notification may include, for example, information such as the type of the written digital certificate (the first digital certificate or the second digital certificate) and the written date and time. Thereafter, the procedure of vehicle 200 ends.

Fig. 3 is subsequent to the sequence of Fig. 2, and illustrates a sequence in which the contract cancellation application of DCM 230 is performed.

In step S16, server 100 determines whether or not a write notification indicating that the first digital certificate has been written in ECU 210 is received by communication unit 130. If the write notification is received (Yes in S16), the procedure proceeds to step S17. If the write notification is not received (No in S16), the procedure of server 100 ends. Note that the process of step S16 may be executed at predetermined intervals.

Here, it is assumed that the information (signal) of step S3 has been sent to server 100.

In step S17, server 100 determines whether or not the signal sent to server 100 based on the operation of step S3 includes contract cancellation application information of DCM 230 and whether or not the contract cancellation application of DCM 230 has been performed three months before the expiration date (deadline of the expiration period) of the first digital certificate (whether or not the signal has been sent to server 100 three months before the expiration date). If the determination result is Yes in step S17, the procedure proceeds to step S18. If the determination result is No in step S17, the procedure of server 100 ends. The above-mentioned signal including contract cancellation application information of DCM 230 is an example of a "contract cancellation signal" of the present disclosure. In addition, server 100 may execute the process of step S17 in response to the reception of the signal when the write notification (the notification of S15) indicating that the first digital certificate is written in ECU 210 has been received. The term of "three months " is an example of a "predetermined period" in the present disclosure.

In addition, if the determination result is No in step S17, server 100 may send to certificate authority 400 an issue request of an updated first digital certificate. This issue request may be sent to certificate authority 400, for example, three months before the expiration date.

The above-mentioned period of three months is merely an example, and a period other than three months (for example, one day, one week, one month, or the like) may be used as the reference of determination in step S17. The period may be set to a period required for issuing the second digital certificate.

In step S18, server 100 sends the issue request of the second digital certificate to certificate authority 400 through communication unit 130. Server 100 may adjust the time to perform the process of step S18 based on the contract period of DCM 230. For example, server 100 may perform the process of step S18 before a predetermined period (for example, one month) before the expiration date of DCM 230. The predetermined period may be set to a period required for issuing the second digital certificate. Next, the procedure of server 100 proceeds to step S22.

In step S19, certificate authority 400 determines whether or not the issue request of the second digital certificate is received. If the issue request of the second digital certificate is received (Yes in S19), the procedure proceeds to step S20. If the issue request of the second digital certificate is not received (No in S19), the procedure of certificate authority 400 ends. Note that the process of step S19 may be executed at predetermined intervals.

In step S20, certificate authority 400 issues a second digital certificate. Next, in step S21, certificate authority 400 sends the second digital certificate issued in step S20 to server 100. Thereafter, the procedure of certificate authority 400 ends.

In step S22, server 100 determines whether or not the second digital certificate is received by communication unit 130. If the second digital certificate is received (Yes in S22), the procedure proceeds to step S23. If the second digital certificate is not received (No in S22), the process of step S22 is repeated.

In step S23, server 100 sends the second digital certificate received from certificate authority 400 in step S21 to vehicle 200 (DCM 230) through communication unit 130.

After the process of step S23, the second digital certificate is written in ECU 210 by the process of step S14 in vehicle 200. Then, by the process of step S15 in vehicle 200, a write notification indicating that the second digital certificate has been written in ECU 210 is sent to server 100.

In step S24, server 100 determines whether or not the write notification of the second digital certificate is received by communication unit 130. If the write notification of the second digital certificate is received (Yes in S24), the procedure proceeds to step S25. If the write notification of the second digital certificate is not received (No in S24), the process of step S24 is repeated.

In step S25, server 100 sends a command signal for turning off the contract flag of DCM 230 to vehicle 200 (DCM 230) through communication unit 130. Thus, the contract flag of DCM 230 in vehicle 200 is turned off. As a result, DCM 230 cannot receive the digital certificate from server 100. Server 100 may execute the process of step S25, for example, at the last day of the contract period of DCM 230.

As can be seen from the steps S17, S24 and S25 described above, when a contract cancellation application of DCM 230 has been performed three months before the expiration date of the first digital certificate, server 100 switches the contract of DCM 230 from valid to invalid after communication unit 130 receives from DCM 230 a signal indicating that the second digital certificate is written in ECU 210. This can prevent the contract of DCM 230 from being switched to invalid before the second digital certificate is received by vehicle 200.

As described above, in the present embodiment, server 100 sends the first digital certificate to DCM 230 through communication unit 130 when a contract cancellation application of the vehicle communication device has not been performed (for example, when the contract application of DCM 230 has been performed). Server 100 sends the second digital certificate to DCM 230 through communication unit 130 when the contract cancellation application of DCM 230 has been performed. Thus, even after the contract of DCM 230 is switched from valid to invalid, the communication connection can be established between vehicle 200 and EVSE 300 using the second digital certificate having a relatively long expiration period. In other words, the communication connection can be more reliably established between vehicle 200 and EVSE 300 even after the contract of DCM 230 becomes invalid.

Further, in the present embodiment, when the contract cancellation application of DCM 230 has been performed three months before the expiration date of the first digital certificate, server 100 sends the second digital certificate to DCM 230 before the contract of DCM 230 is cancelled. Thus, it is possible to secure a period of about three months to issue the second digital certificate. As a result, the second digital certificate can be easily sent to DCM 230 before the first digital certificate expires.

Furthermore, in the present embodiment, server 100 sends the second digital certificate to DCM 230 through communication unit 130 when communication unit 130 has received a signal indicating that a contract cancellation application of DCM 230 has been performed by the user of vehicle 200. Thus, this signal can trigger server 100 to send the second digital certificate to DCM 230.

### <Modification>

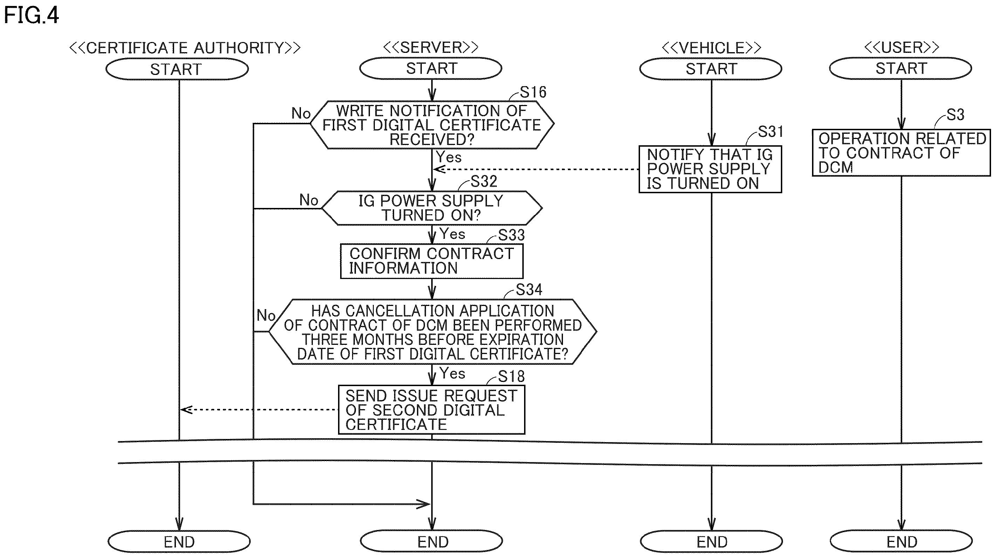

Fig. 4 illustrates a modification of Fig. 3. When the user has performed an operation related to the contract of DCM 230 in step S3, the contract information of DCM 230 is updated. The contract information is stored in memory 120 of server 100, for example. The contract information may be stored in the cloud.

In step S31, when an ignition (IG) power supply of vehicle 200 is turned on, vehicle 200 sends a notification notifying that the IG power supply is turned on to server 100 through DCM 230.

If the determination result is Yes in step S16, the process of step S32 is performed. In step S32, server 100 determines whether or not the IG power supply of vehicle 200 is turned on. If the notification of step S31 is received by communication unit 130, server 100 determines that the IG power supply is turned on. If the notification is received (Yes in S32), the procedure proceeds to step S33. If the notification is not received (No in S32), the procedure of server 100 ends.

In step S33, server 100 confirms the contract information of DCM 230 stored in memory 120. Then, the procedure proceeds to step S34.

In step S34, server 100 determines, based on the contract information, whether or not the contract cancellation application of DCM 230 has been performed, and whether or not the contract cancellation application has been performed three months before the expiration date of the first digital certificate. If the determination result is Yes in step S34, the procedure proceeds to step S18. If the determination result is No in step S34, the procedure of server 100 ends. Since step S18 and the subsequent steps are the same as those in Fig. 3, the description thereof will not be repeated.

As described above, in the modification illustrated in Fig. 4, server 100 confirms the contract information of DCM 230, and determines whether or not the contract cancellation application of DCM 230 has been performed based on the contract information. Accordingly, server 100 can detect whether or not the contract cancellation application of DCM 230 has been performed without the need of receiving a signal from car navigation device 240, the user terminal, or the like.

In the modification illustrated in Fig. 4, server 100 confirms the contract information when the IG power supply of vehicle 200 is turned on. Since the contract information is confirmed every time the IG power supply of vehicle 200 is turned on, it is possible to reduce the delay in issuing the second digital certificate after the contract cancellation application has been made.

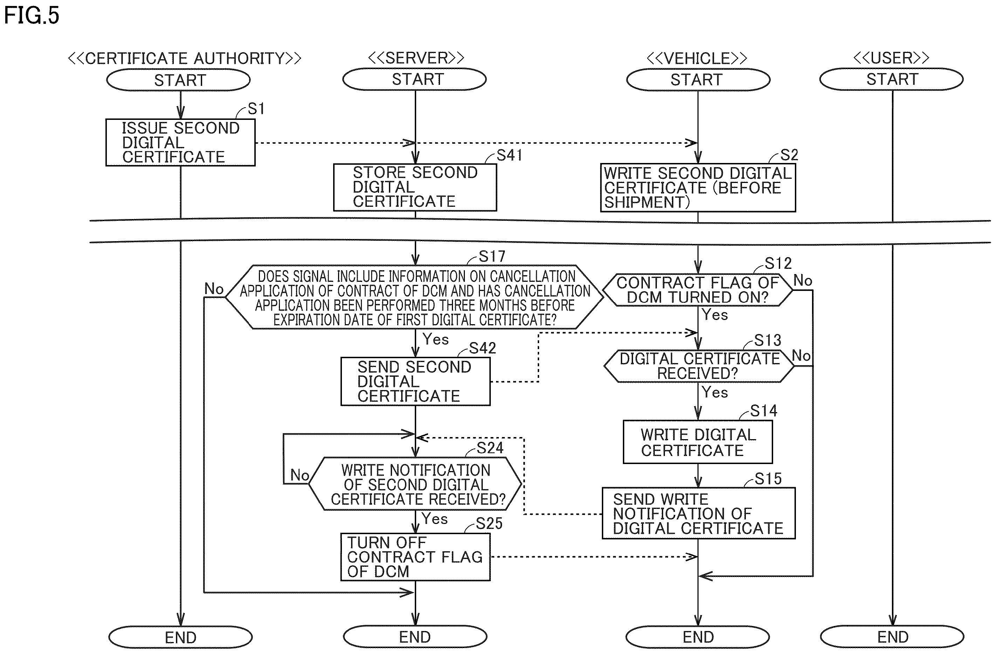

Fig. 5 illustrates a modification of the procedure of Figs. 2 and 3. As illustrated in Fig. 5, the second digital certificate issued by certificate authority 400 in step S1 is not only sent to vehicle 200 but also sent to server 100. Vehicle 200 may be configured to send the second digital certificate received from certificate authority 400 to server 100. Server 100 may also be configured to send the second digital certificate received from certificate authority 400 to vehicle 200. Certificate authority 400 may be configured to send the second digital certificate to server 100 in response to a request of sending the second digital certificate from server 100.

In step S41, server 100 stores the second digital certificate sent from certificate authority 400 in memory 120. In this case, memory 120 is an example of a "storage unit" of the present disclosure.

In the example illustrated in Fig. 5, if the determination result is Yes in step S17, the procedure proceeds to step S42. In step S42, server 100 sends the second digital certificate stored in memory 120 in step S41 to vehicle 200 through communication unit 130. Since the other processes are the same as those in the embodiment described above, the description thereof will not be repeated.

With this configuration, server 100 can send the second digital certificate to vehicle 200 without requesting certificate authority 400 to issue the second digital certificate. Since the issue request to certificate authority 400 is not necessary, the second digital certificate can be sent to vehicle 200 more quickly after the contract cancellation application of DCM 230 is performed, and the processing load of server 100 can be reduced.

Although in the above embodiment, it is described that the second digital certificate received from certificate authority 400 is written in ECU 210 before the shipment of vehicle 200, the present disclosure is not limited thereto. The second digital certificate may be written in ECU 210 at the time of manufacturing (designing) ECU 210.

In the modification illustrated in Fig. 4, the contract information is confirmed when the IG power supply is turned on, but the present disclosure is not limited thereto. The contract information may be confirmed at a timing (for example, when connector 302 is plugged into vehicle 200) other than the timing when the IG power supply is turned on.

The configurations (controls) described in the above embodiment and modifications may be combined with each other.

Although the embodiments of the present disclosure have been described, it should be understood that the embodiments disclosed herein are illustrative and non-restrictive in all respects. It is intended that the scope of the present invention is not limited to the description above but defined by the scope of the claims and encompasses all modifications equivalent in meaning and scope to the claims.

## Claims

1. A server (100) for sending, to a vehicle (200), a digital certificate to be used in communication between the vehicle (200) and a power stand (300), the server (100) comprising:
a communication unit (130) that is configured to communicate with a vehicle communication device (230) of the vehicle; and
a control unit (110),
the digital certificate including a first digital certificate and a second digital certificate having a longer expiration period than the first digital certificate,
the control unit (110) is configured to:
send the first digital certificate to the vehicle communication device (230) through the communication unit (130) when a contract cancellation application of the vehicle communication device (230) has not been performed, and
send the second digital certificate to the vehicle communication device (230) through the communication unit (130) when the contract cancellation application of the vehicle communication device (230) has been performed.

2. The server according to claim 1, wherein
the control unit (110) is configured to send the first digital certificate to the vehicle communication device (230) through the communication unit (130) when a contract application of the vehicle communication device (230) has been performed by a user of the vehicle (200).

3. The server according to claim 1 or 2, wherein
the control unit (110) is configured to:
perform a process of confirming contract information of the vehicle communication device (230), and
determine whether or not the contract cancellation application of the vehicle communication device (230) has been performed based on the contract information.

4. The server according to claim 3, wherein
the control unit (110) is configured to perform the process of confirming the contract information when an ignition power supply of the vehicle (200) is turned on.

5. The server according to claim 1 or 2, wherein
the control unit (110) is configured to send the second digital certificate to the vehicle communication device (230) through the communication unit (130) when the communication unit (130) receives a contract cancellation signal indicating that the contract cancellation application of the vehicle communication device (230) has been performed by a user of the vehicle (200).

6. The server according to claim 1 or 2, wherein
when the contract cancellation application of the vehicle communication device has been performed for a predetermined period before an expiration date of the first digital certificate, the control unit (110) is configured to send the second digital certificate to the vehicle communication device (230) through the communication unit (130) before a contract of the vehicle communication device (230) is cancelled.

7. The server according to claim 6, wherein
the vehicle communication device (230) is allowed to receive the digital certificate from the communication unit (130) if the contract of the vehicle communication device (230) is valid, and is not allowed to receive the digital certificate from the communication unit (130) if the contract of the vehicle communication device (230) is invalid,
when the contract cancellation application of the vehicle communication device (230) has been performed for the predetermined period before the expiration date of the first digital certificate, the control unit (110) is configured to switch the contract of the vehicle communication device (230) from valid to invalid after the communication unit (130) receives from the vehicle communication device (230) a signal indicating that the second digital certificate has been written in an ECU (210) of the vehicle (200).

8. A system (1) comprising:
the server (100) according to claim 1 or 2; and
a vehicle (200) equipped with a vehicle communication device (230) that is configured to communicate with the communication unit (130).

9. The system of claim 8, wherein
the vehicle includes an ECU (210) which allows the first digital certificate and the second digital certificate to be written therein, and
the second digital certificate is initially written in the ECU (210).

10. The system of claim 9, wherein
the vehicle communication device (230) is allowed to communicate with a certificate authority (400) that issues the first digital certificate and the second digital certificate,
the server (100) includes a storage unit (120) that is configured to store the second digital certificate which is sent from the certificate authority to the vehicle communication device (230) and initially written in the ECU (210), and
the server (100) is configured to send the second digital certificate stored in the storage unit (120) to the vehicle communication device (230) through the communication unit (130) when the contract cancellation application of the vehicle communication device (230) has been performed.
